# EUROPEAN PATENT SPECIFICATION

(11) **EP 0 333 378 B1**
(45) Date of publication and mention of the grant of the patent: **11.09.1996**
(21) Application number: 89302329.1
(22) Date of filing: 09.03.1989
(51) Int. Cl.: G11B 33/12, G11B 15/43, G11B 15/67, G11B 15/29

(54) **Magnetic tape recording and playback device**
Magnetband Aufnahme- und Wiedergabegerät
Appareil d'enregistrement et de reproduction à bande magnétique

(30) Priority: 15.03.1988 JP 62126/88; 29.07.1988 JP 191374/88; 17.09.1988 JP 232918/88; 06.10.1988 JP 252322/88; 28.07.1988 JP 100345/88; 31.08.1988 JP 115404/88
(43) Date of publication of application: 20.09.1989
(60) Divisional application: 94114278.8
(73) Proprietor: MITSUBISHI DENKI KABUSHIKI KAISHA, Tokyo (JP)
(72) Inventor: Fujiwara, Osamu, Nagaokakyo-shi Kyotofu (JP); Nakagawa, Kunihiko, Nagaokakyo-shi Kyotofu (JP); Kakuta, Yoshinori, Nagaokakyo-shi Kyotofu (JP); Tomita, Masami, Nagaokakyo-shi Kyotofu (JP); Kishikawa, Seiji, Nagaokakyo-shi Kyotofu (JP); Yuri, Tooru Mitsubishi Denki K. K., Nagaokakyo-shi Kyotofu (JP)
(74) Representative: Barnard, Eric Edward

(56) References cited:
- EP-A- 0 168 987
- EP-A- 0 204 350
- DE-A- 3 625 001
- DE-A- 3 636 681
- GB-A- 2 169 125
- US-A- 4 694 983
- PATENT ABSTRACTS OF JAPAN, vol.7, no.101, P194, 20 August 1981; & JP- A - 58023354 (SANYO DENKI KK) 12.02.83
- PATENT ABSTRACTS OF JAPAN, vol.11, no. 12, P535, 14 February 1985; & JP - A - 61187151 (MATSUSHITA ELECTRIC IND CO) 20.08.86
- PATENT ABSTRACTS OF JAPAN, vol. 6, no.254, E148, 14 December 1982; & JP - A - 57153560 (TOKYO SHIBAURA DENKI K.K.) 22.09.1982
- PATENT ABSTRACTS OF JAPAN, vol. 12, no.94, E593, 26 March 1988; & JP - A - 62225156 (MATSUSHITA ELECTRIC WORKS LTD.) 03.10.1987
- PATENT ABSTRACTS OF JAPAN, vol. 7, no. 125, P200, 31 May 1983; & JP - A - 58041462 (SONY K.K.) 10.03.1983
- PATENT ABSTRACTS OF JAPAN, vol. 10, no. 316, P510 (2372), 28 October 1986; & JP - A - 61126655 (CANON INC.) 14.06.1986
- PANENT ABSTRACTS OF JAPAN, vol. 12, no 154, P700 (3001), 12 May 1988; &JP - A - 62270648 (SANKYO SEIKI MFG CO LTD) 04.11.1987

## Description

The invention concerns a magnetic tape recording and playback apparatus with a magnetic tape loading mechanism, in particular, a helical scan system as used in a video tape recorder and digital audio tape recorder.

In a conventional magnetic tape recording and playback apparatus with a helical scan system, a rotating drum equipped with a magnetic head device that has rotating magnetic heads is for example installed on a mechanical chassis in a state coaxial with a fixed drum. A magnetic tape is made to run along the peripheries of these drums so that when the heads rotate at high speed, recording tracks are formed at an inclined angle on the tape. In this way, signals may be recorded or played back.

In such a magnetic tape recording and playback apparatus, there is provided a loading mechanism which takes out the tape from a tape cassette, and winds it around the drums automatically. This loading mechanism comprises a loading block with tape guides, such as a return guide and an inclined guide which engage with and guide the magnetic tape.

The loading block may be driven by a rotating member such as a loading ring which rotates so as to bring the tape from the cassette to a specific loading position near the drums. The rotating member is driven by a motor and the position of the loading block is detected by a switch.

This magnetic tape recording and playback apparatus also has a pinch roller pressure mechanism which presses a pinch roller on a capstan. The pressure mechanism may comprise a pinch arm which is for example free to pivot on its one end, the other end thereof being fitted with the pinch roller, and the pinch roller being pressed to the capstan by the action of a solenoid or of a control motor and cam.

In this apparatus, when the pinch roller is pressed against the capstan (i.e. when the pinch roller is ON), the magnetic tape runs at a constant rate, and when the pinch roller is released from the capstan (i.e. when the pinch roller is OFF), the magnetic tape can be moved in fast forward or rewind mode etc.

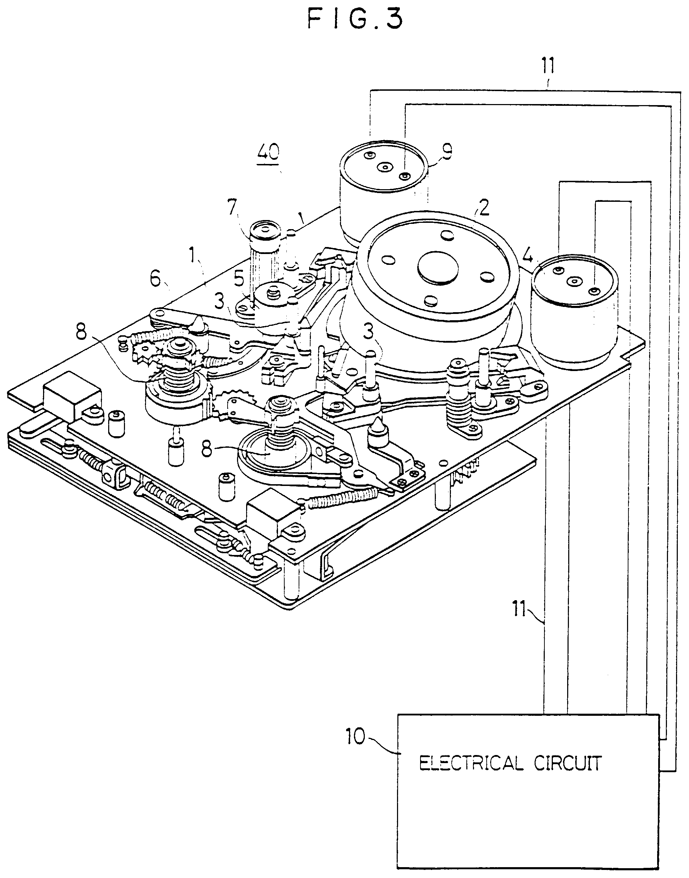

Figure 3 shows a conventional example of magnetic tape recording and playback apparatus disclosed in Patent Application Laid-Open No. 8755/1986. In the Figure, 1 is a mechanical chassis, 2 is a rotating drum, and 3 is a pair of tape guides which take out a magnetic tape and allow it to run smoothly. 4 is a loading mechanism drive motor, 5 is a pinch roller, and 6 is a pinch arm. 7 is a capstan, 8 designates a pair of reel blocks, and 9 is a motor which drives capstan 7 and reel blocks 8, and runs the tape. 40 is a deck mechanism comprising all the above parts. 10 is an electrical circuit which drives and controls deck mechanism 40, and 11 are lead wires as an interface between deck mechanism 40 and electrical circuit 10.

In the conventional magnetic tape recording and playback apparatus described above, deck mechanism 40 and electrical circuit 10 are separated, and lead wires 11 are therefore necessary to interconnect them. As there are from several tens to a hundred or so of these lead wires, a great deal of bothersome soldering and connections have to be carried out. The lead wires sometimes break and assembly work is therefore very slow. Furthermore, the fact that the deck mechanism and electrical circuit are separate from each other means that it is difficult to manipulate the apparatus especially in manufacturing or repairing.

Figures 9 to 11 are diagrams showing the second conventional magnetic tape recording and playback apparatus disclosed, for example, in Patent Application Laid-Open No. 187151/1986. Figure 9 is a plan view of an essential structure showing mainly parts fixed to an upper side of chassis, Figure 10 is a plan view showing mainly parts fixed to a lower side of chassis, and Figure 11 is a longitudinal section in part of the apparatus.

In the Figures, 201 is a chassis, and 202 is a reel wheel fixed to chassis 201. 203a is a capstan supported rotatably on chassis 201, and 203b is a flywheel fixed to capstan 203a. 204 is a tape cassette which engages with reel wheels 202 and is located in a specific position on chassis 201. 205 is a magnetic tape wound in tape cassette 204, and 206 is a rotating drum which has magnetic heads and is mounted rotatably on chassis 201. 207 and 208 are guide grooves formed on chassis 201. 209 and 210 are tape loading blocks passing respectively through guide grooves 207 and 208. 211 is a tension pin fixed to tension arm 212a which is supported rotatably on chassis 201. 212b is an extension spring of which the ends are attached respectively to tension arm 212a and chassis 201. 213 is a pinch roller fitted rotatably on pinch arm 214a. 215, 216 and 217 are tape guides installed on chassis 201.

218 and 219 are gears supported underneath chassis 201 so that they can rotate. 220 and 221 are arms fixed respectively to gears 218 and 219. 222 and 223 are links, one end of each of them being attached to arms 220 and 221 respectively such that they can rotate freely, and the other end thereof being attached to tape loading blocks 209 and 210 respectively such that they can rotate freely. 224 is a slider sliding underneath chassis 201. 225 and 226 are slits formed on slider 224. 227 and 228 are pins mounted on chassis 201 so that they pass through slits 225 and 226 respectively. 229A is a pressure member which engages with gears 218 and 219, and which like slider 224 has slits through which pins 227 and 228 pass. 229B is an extension spring attached to slider 224 and pressure member 229A. 229a and 229b are racks formed on pressure member 229A. 230 is a guide groove formed on slider 224.

231 is a circular cam supported rotatably underneath chassis 201. 232 is a cam groove formed on the bottom of cam 231, and 233 is a pin which is attached on arm 234 and engages with cam groove 232. Arm 234 is supported rotatably underneath chassis 201. 235 is a pin attached on arm 234, and 236 is a drive gear which is installed underneath chassis 201 and engages with cam 231.

237 and 238 are cam grooves formed on the upper surface of circular cam 231. 239 and 240 are pins engaging with cam grooves 237 and 238 respectively. 241 and 242 are arms on which pins 239 and 240 are attached respectively. 243 is a spring of which one end is attached to pin 239; the other end, to pinch arm 214a.

224 is an upper slider sliding on the upper surface of chassis 201. 245 is a guide groove formed on upper slider 244. 246 is a pin which is fixed on arm 242 and engages with guide groove 245. 247 is a slit formed on upper slider 244. 248 is a pin which is fixed on chassis 201 and passes through slit 247. 249 is a slit formed on chassis 201. 250 is a pin which is attached on upper slider 244 and passes through slit 249. 251 is a pressure portion formed on upper slider 244, and 252 is a hook formed on tension arm 212a.

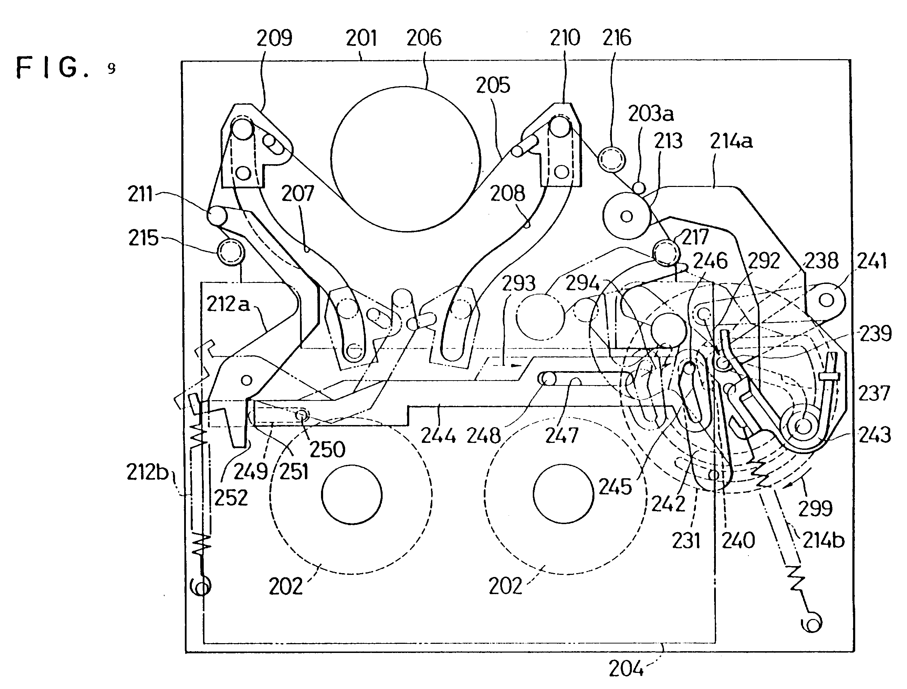

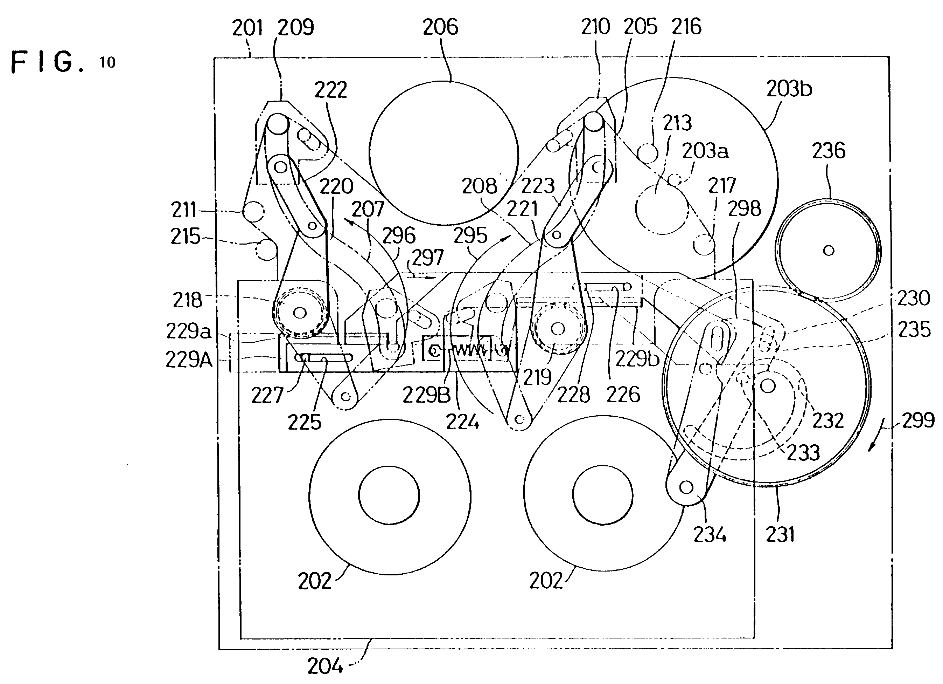

The operation of this apparatus will be explained below. In Figs. 9 and 10 the elements shown by two-dot chain lines are in the 1st position where magnetic tape 205 has not been taken out from tape cassette 204, i.e. in the position of unloading. The elements shown by solid lines are in the 2nd position where magnetic tape 205 has been taken out from tape cassette 204 and brought into contact with rotating drum 206, i.e. in the position of loading.

In Fig. 10 the loading begins by starting a loading motor not shown. The motor torque is transmitted to drive gear 236, and cam 231 is rotated in the direction shown by arrow 299. Following this motion, arm 234 rotates in the direction shown by arrow 298, and lower slider 224 slides in the direction shown by arrow 297.

Since racks 229a, 229b formed on pressure member 229A engage with gears 218, 219 arms 220 and 221 rotate in the directions shown by arrows 296 and 295 respectively, and tape loading blocks 209 and 210 take out magnetic tape 205 from the cassette 204 so as to bring it into the 2nd position where it is in contact with rotating drum 206. At this time, tape loading blocks 209 and 210 move through guide grooves 207 and 208 respectively until they reach the loading position.

Simultaneously, the parts located on the upper surface of chassis 201 move as shown in Fig. 9. When cam 231 rotates in the direction of arrow 299, pin 240 slides along cam groove 238, arm 242 rotates in the direction of arrow 294, and upper slider 244 moves in the direction of arrow 293. At this time tension arm 212a, of which the rotation had been prevented by the contact of pressure portion 251 with hook 252, rotates until the tension in magnetic tape 205 balances that in extension spring 212b.

At the same time, pinch arm 214a rotates in the clockwise direction while maintaining contact with tape guide 217 which rotates under the driving force of another drive gear not shown in the figure. Pin 239 slides along cam groove 237, arm 241 rotates in the direction of arrow 292, and pinch roller 213 mounted on pinch arm 214a is pressed on capstan 203a in opposition to the force of compression spring 243.

When magnetic tape 205 is released from rotating drum 206, the loading motor not shown in the figure rotates in the reverse direction, and cam 231 rotates in the direction opposite to arrow 299. Following this motion, the levers, arms and sliders rotate or move in the directions opposite to the arrows and return to their original positions of unloading shown by the two-dot chain line, i.e.e to the 1st position in which the magnetic tape is not taken out.

In the conventional magnetic tape recording and playback apparatus of above construction, many cam grooves 232, 237, 238 are formed on circular cam 231 which is needed to be installed in a limited space. As a result, the grooves have to be formed on both sides of the cam, and the cam must have a considerable thickness. Moreover, the moving amounts of pins 233, 239 and 240 which engage with the grooves of cam 231 are limited less than the radius of the cam. In order to drive the parts which have a great amount of movement, therefore, it is necessary to interpose other members between the parts and the cam. This means that the arrangement of parts is complex, and the device cannot be made compact.

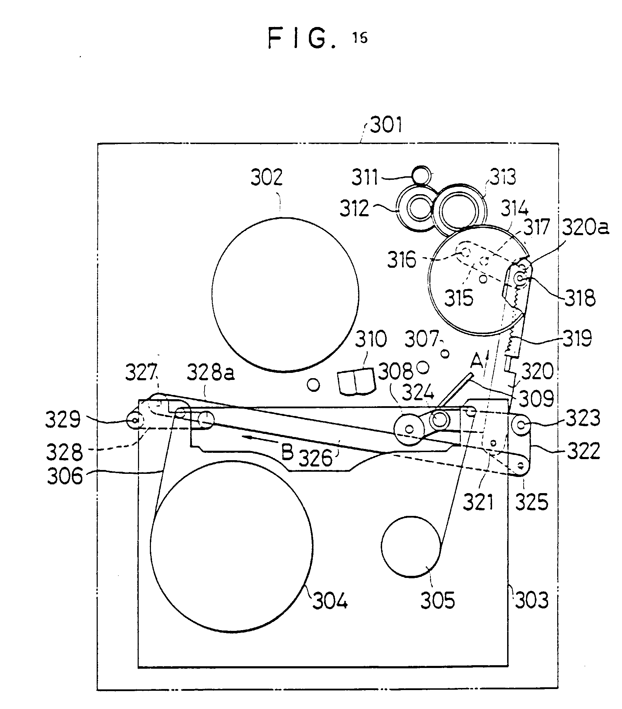

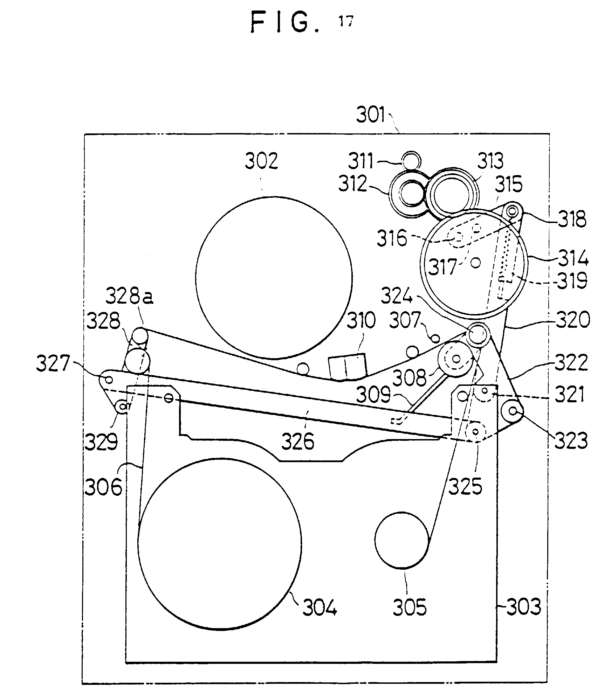

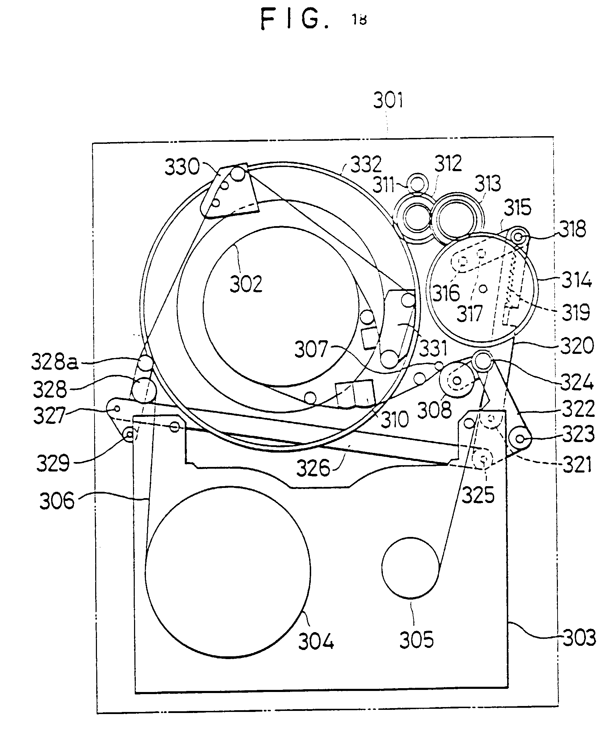

Figs. 16 to 18 are drawings of the third conventional magnetic tape recording and playback apparatus disclosed in Utility Model Application Laid-Open No. 166840/1985. Fig. 16 is a plan view of the device in a state of unloading, Fig. 17 is a plan view of the device in the half-loading position, and Fig. 18 is a plan view of the apparatus in a state of loading. In the figures, 301 is a chassis, 302 is a rotating drum installed at a specific inclined angle on chassis 301, and 303 is a tape cassette positioned on the chassis 301. Magnetic tape 306 is taken out from supply reel 304, and after being wound at a specific angle on rotating drum 302, is taken up by take-up reel 305. 307 is a capstan, 308 is a pinch roller, and 309 is a guide groove formed on chassis 301 for guiding pinch roller 308. 310 is a fixed head installed on chassis 301. 314 is a loading cam driven by loading motor 311 via reducing gears 312 and 313. 315 is a cam lever, and 316 is a pin fixed on chassis 301. One end of cam lever 315 is supported rotatably by pin 316. 317 is a pin which is installed in the centre portion of cam lever 315, and engages with a guide groove (not shown in the figure) formed on loading cam 314. 318 is a pin mounted at another end of cam lever 315. 319 is a spring of which one end is attached to pin 318; another end, to a connecting bar 320. 320a is a guide groove which is formed at one end of connecting bar 320, and with which pin 318 engages. 321 is a pin attached at another end of connecting bar 320. 322 is a pinch arm which rotates on pin 323 fixed on chassis 301 and on which pin 321 is mounted rotatably. 324 is a guide post mounted on pinch arm 322 together with pinch roller 308. 325 is a pin which is attached at one end of connecting bar 326 and engages with pinch arm 322 such that it can rotate. 327 is a pin fitted at another end of connecting bar 326. 328 is a tape guide arm which rotates on pin 329 fixed on chassis 301 and on which pin 327 is mounted rotatably. 328a is a tape guide post mounted on said tape guide arm 328.

330 and 331 are tape loading blocks which engage with ring gear 332 so as to wind magnetic tape 306 on rotating drum 302.

The operation of this apparatus will be described below. First the loading operation in Fig. 16 is discussed. Loading motor 311 rotates in the clockwise direction, and this rotates loading cam 314 in the anticlockwise direction via reducing gears 312 and 313. Pin 317 attached on cam lever 315 slides along the side walls of the guide groove formed on said loading cam 314, so cam lever 315 pivots on pin 316 in the anticlockwise direction. Pin 318 is fitted on cam lever 315 then moves connecting bar 320 via spring 319 in the direction of arrow A in the figure. Since connecting bar 320 is engaged with pinch arm 322 via pin 321, pinch arm 322 pivots on pin 323 in the clockwise direction. This causes both pinch roller 308 and guide post 324 mounted on pinch arm 322 to move in the loading direction.

As a result of the rotation of pinch arm 322, connecting bar 326 moves via pin 325 in the direction of arrow B in the figure. As connecting bar 326 is engaged with tape guide arm 328 via pin 327, tape guide arm 328 is made to rotate on pin 329, and tape guide post 328a mounted on tape guide arm 328 is thereby loaded to a specific position. These operations bring the apparatus to the half-loading position shown in Fig. 17.

In Fig. 18, ring gear 332 receives a driving force from a drive transmission mechanism (not shown in the figure) via a gear area on its outer circumference, and rotates in the clockwise direction. Tape loading blocks 330 and 331 which are engaged with ring gear 332 and situated inside of tape cassette 303 up to the half-loading position, then take out magnetic tape 306 and wind it on rotating drum 302 at a specific angle so as to reach the loading position shown in Fig. 18.

In the above conventional magnetic tape recording and playback apparatus, tape guide arm 328 is located far from loading cam 314 which drives it, and the drive transmission mechanism from the cam to the arm therefore needs many components such as levers. As a result, it is difficult to ensure the precision of components or dimensional precision among many components, and the structure also takes up too much space.

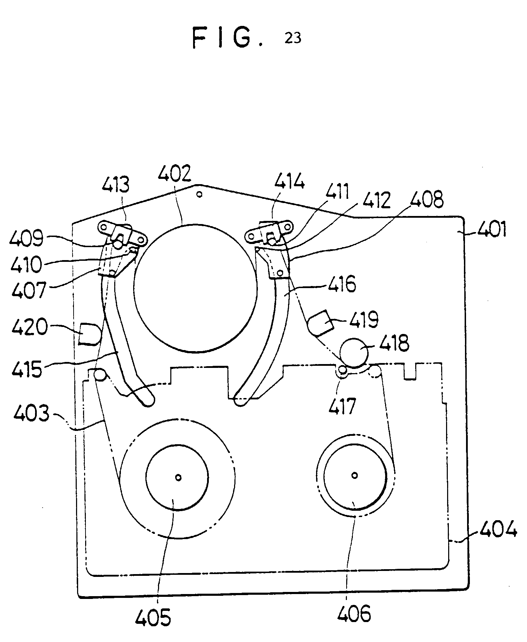

Fig. 23 is a plan view of the fourth conventional magnetic tape recording and playback apparatus in a state of tape-loading disclosed in Japanese Patent Application Laid-Open No. 36772/1987. In the figure, 401 designates a chassis, and 402 is a rotating drum which is attached on chassis 401 and has magnetic heads. 403 is a magnetic tape which is wound and moved around rotating drum 402. 404 is a tape cassette in which tape 403 is stored by being wound around supply reel 405 and tape-up reel 406. 407 and 408 are tape loading blocks which have guide posts 409 to 412 for moving magnetic tape 403 smoothly, to take out tape 403 from cassette 404 and wind it around rotating drum 402. 413 and 414 are stoppers fixed on chassis 401 for stopping tape loading blocks 407 and 408 and specific position after they load magnetic tape 403 around rotating drum 402. 415 and 416 are guide grooves formed on chassis 401 for guiding movement of tape loading blocks 407 and 408. 417 is a capstan located at a take-up side of rotating drum 402 and 418 is a pinch roller for pressing magnetic tape 403 on capstan 417. 419 and 420 are a control head and an erase head respectively, each of them coming into contact with loaded magnetic tape 403.

In the apparatus described above, magnetic tape 403 is taken out from tape cassette 404 and wound around rotating drum 402 by guide posts 409 to 412 attached on tape loading blocks 407 and 408. After that, magnetic tape 403 is run by pinch roller 418 and capstan 417 rotating at a specific rate and the information is recorded to and played back from the magnetic tape running at a specific rate. At the time of unloading, tape loading blocks 407 and 408 move back along guide grooves 415 and 416 and magnetic tape 403 is stored in tape cassette 404.

Next the tape loading mechanism with tape loading blocks 407 and 408 will be described below.

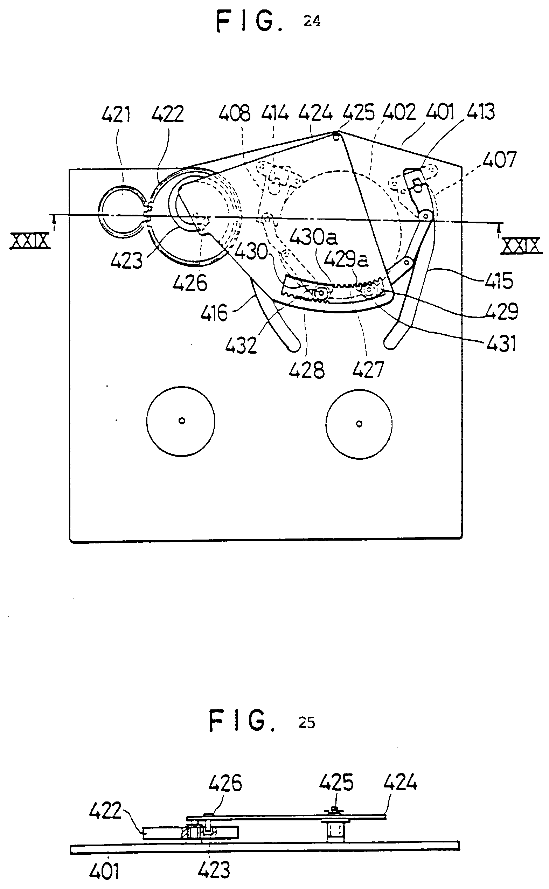

Fig. 24 is a bottom view of the tape loading mechanism shown in Fig. 23 and Fig. 25 is a cross section along the line XXIX-XXIX of Fig. 24. In the figures, 421 is a gear to which a force generated from a driving source (not shown) for tape loading is transmitted. 422 is a cam gear on which a cam groove 423 is formed almost all around and which rotates in the left and right directions from one end of cam groove 423 to another. 424 is a rotating plate which rotates on pivot 425 and on which pin 426 engaging with cam groove 423 is fixed. Pin 426 moves along cam groove 423 in the radial direction of cam gear 422 in accordance with the rotation of cam gear. Therefore rotating plate 424 rotates on pivot 425 in the left and right directions. Rotating plate 424 has gear portions 427 and 428 engaging with gears 429a and 430a which are fixed on oscillating member 429 and 430 rotating on pivots 431 and 432, respectively.

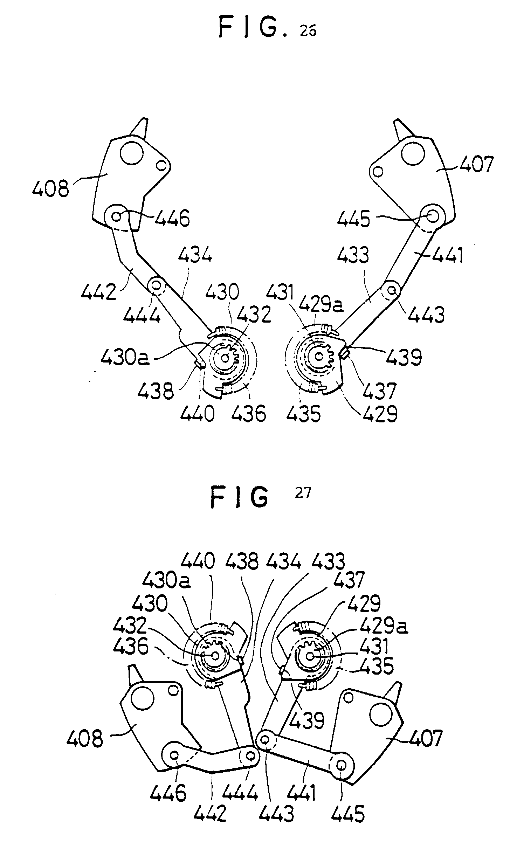

Figs. 26 and 27 show in detail a drive mechanism comprising components from oscillating members 429 and 430 to tape loading blocks 407 and 408 in a state of tape-loading and tape-unloading, respectively.

In the figures 433 and 434 are arms which are rotatable on pivots 431 and 432 and stop in a state of unloading at the positions where stoppers 437 and 438 fitted on arm 433 and 434 are pressed to engaging portions 439 and 440 formed on oscillating members 429 and 430 according to the force generated by springs 435 and 436 interposed between arms 433 and 434 and oscillating members 429 and 430, respectively. 441 and 442 are arms of which the ends are connected rotatably to arms 433 and 434 through pivots 443 and 444, another ends being connected rotatably to tape loading blocks 407 and 408 through pivots 445 and 446, respectively.

In the tape loading mechanism described above, in the state of unloading, magnetic tape 403 is inside of tape cassette 404 and tape loading blocks 407 and 408 are positioned as shown in Fig. 27. At the time of starting loading from this state, gear 421 is rotated by a driving source for tape loading, cam gear 422 rotates in the clockwise direction in Fig. 24, pin 426 moves from the periphery to the inside of cam gear 422 along cam groove 423, and rotating plate 424 rotates on pivot 425 in the clockwise direction. Therefore oscillating members 429 and 430 rotate in the anticlockwise and clockwise directions because gears 429a and 430a engaging with gear portions 427 and 428 rotate in anticlockwise and clockwise directions respectively, and tape loading blocks 407 and 408 move along guide grooves 415 and 416.

Since oscillation members 429 and 430 are driven by further rotation of rotating plate 424 in the clockwise direction after tape loading blocks 407 and 408 come into contact with stoppers 413 and 414, tape loading blocks 407 and 408 are pressed to stoppers 413 and 414 by the force generated from extended springs 435 and 436.

In such a conventional magnetic tape recording and playback device, cam groove 423 is needed to be of such a depth that pin 426 does not separate from cam groove 423, and to be formed to the extent of almost 360 degrees.

Accordingly, due to the requirement for a strong and reliable device, the bottom of cam groove 423 is necessarily thick. Further, it is necessary to make the actuation distance of pin 426 long and the reduction ratio between gear portions 427 and 428 and oscillating members 429 and 430, large. This hinders the realisation of a thin device.

### SUMMARY OF THE INVENTION

An object of the invention is to solve the problems stated above and provide an improved apparatus.

Another object of the invention is to provide a magnetic tape recording and playback apparatus which is thin and compact with a greater freedom in the arrangement of the components.

A further object of the invention is to provide a magnetic tape recording and playback apparatus with a tape loading mechanism wherein a drive transmission mechanism comprises a small number of components, dimensional errors among components are substantially eliminated, and the structure takes up small space.

According to the invention there is provided a magnetic tape recording and playback apparatus for recording signals on and playing back signals from a magnetic tape comprising:
a rotatable drum;
a tape loading block which serves to remove a magnetic tape from a tape cassette and winds the tape around the drum;
a rotatable member comprising an arcuate portion which has at least one guide groove;
means for driving the rotatable member and
a slider which is drivably connected to means for advancing and retracting said tape loading block so that movement of the slider in a first direction advances said loading block to a loading position in which the magnetic tape is in contact with said rotating drum and movement of the slider in a second direction retracts said loading block to an unloading position;
characterised by a pin fixed to said slider and in sliding engagement with said guide groove in the rotatable member and by gearing on the arcuate portion of the rotatable member which engages with a drive gear so as to form said means for driving to the rotatable member whereby driving of said rotatable member causes said pin to slide within the groove and thereby urges said slider to move in said first or second directions.

### BRIEF DESCRIPTION OF THE DRAWINGS

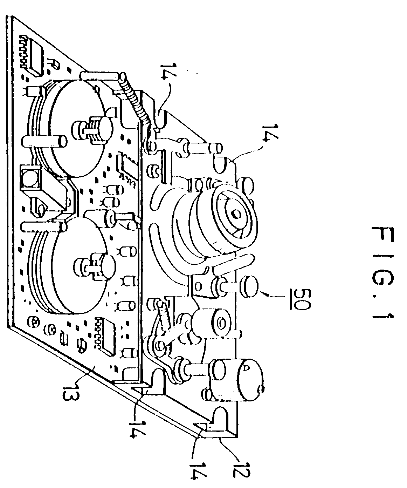

Fig. 1 is a perspective view of a magnetic tape recording and playback apparatus according to an embodiment of the invention.

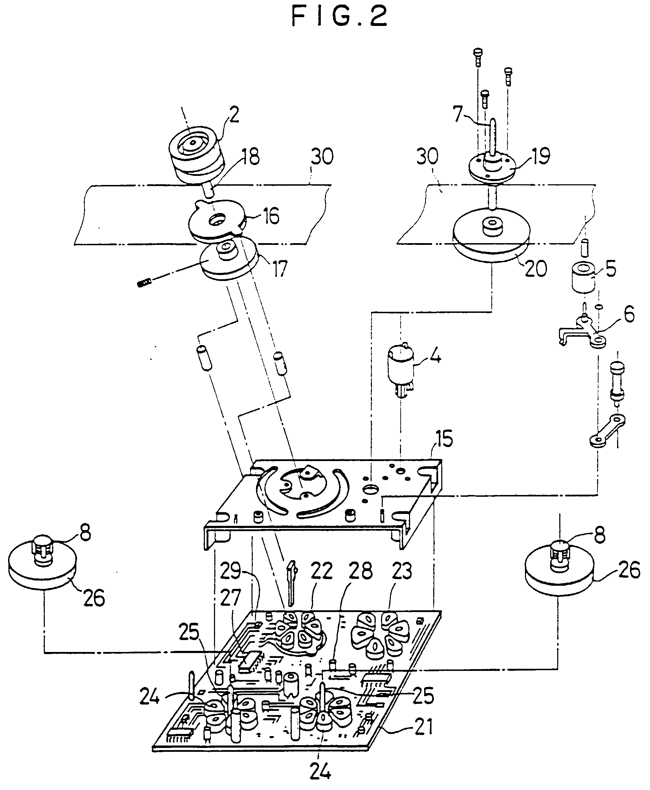

Fig. 2 is an exploded view of the apparatus in Fig. 1.

Fig. 3 is a perspective view of a conventional magnetic tape recording and playback apparatus.

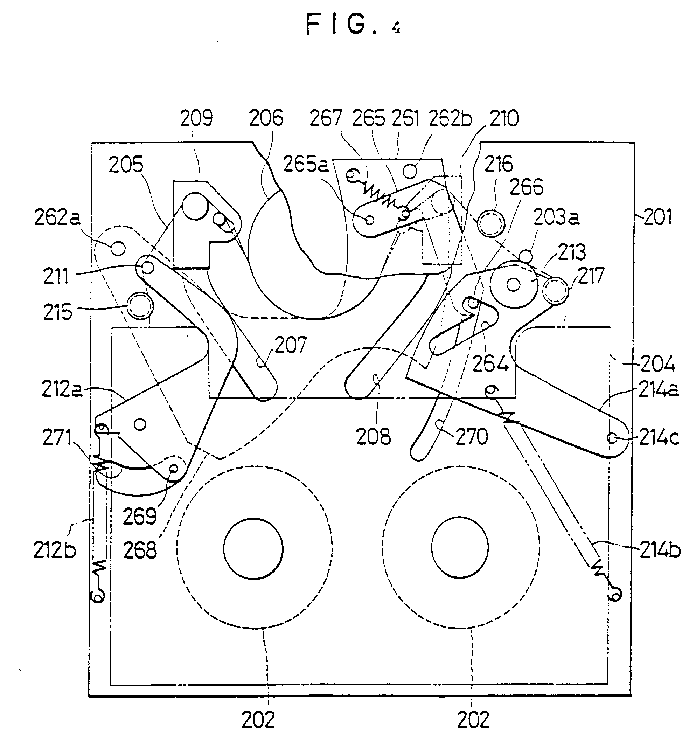

Fig. 4 is a plan view of the essential parts attached to the upper surface of a chassis of the apparatus shown in Figures 1 and 2 in a state of loading.

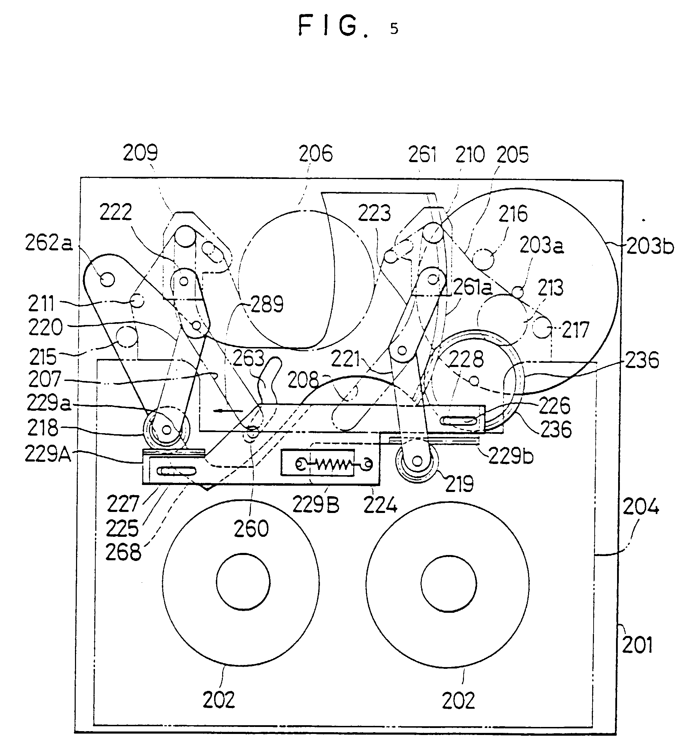

Fig. 5 is a plan view of the essential parts attached to the lower surface of the chassis of the apparatus shown in Figure 4.

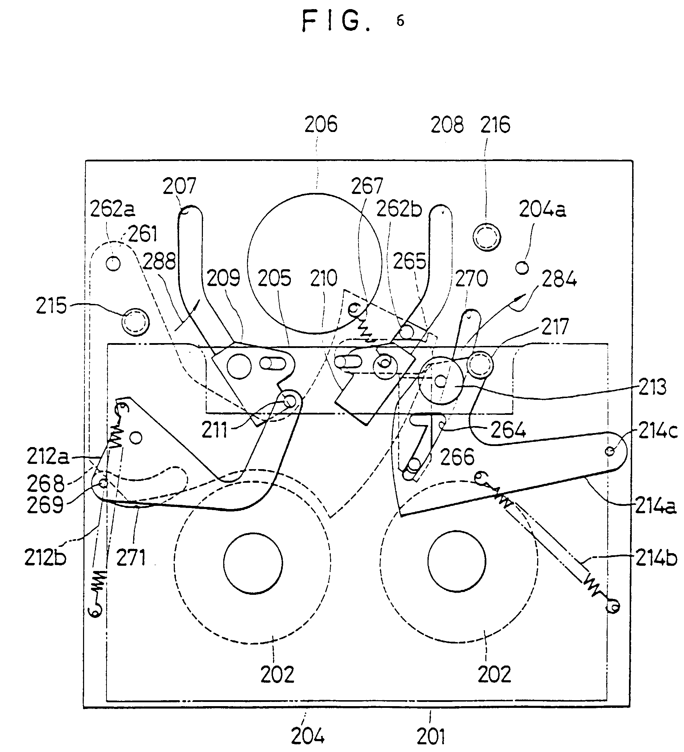

Figure 6 is a plan view of the essential parts attached to the upper surface of the chassis of the apparatus as shown in Figure 4 in a state of unloading.

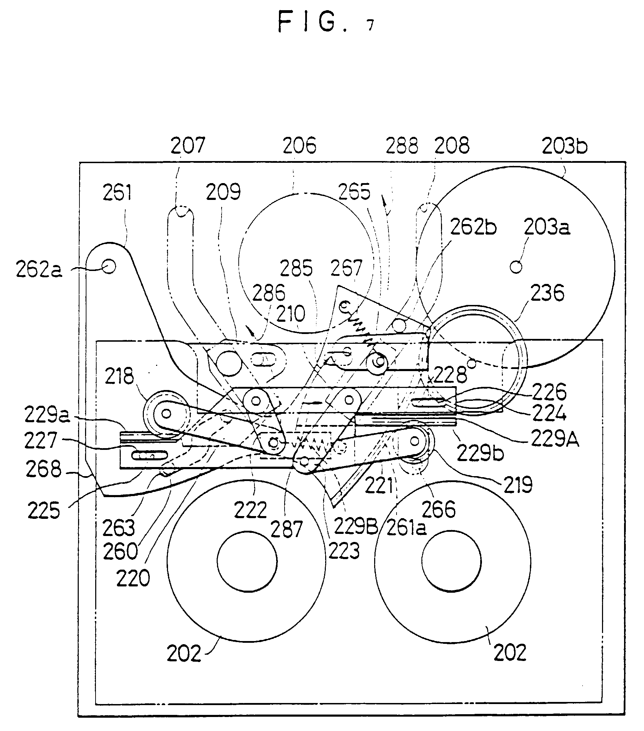

Fig. 7 is a plan view of the essential parts attached to the lower surface of the chassis of the apparatus shown in Figure 4 in a state of unloading.

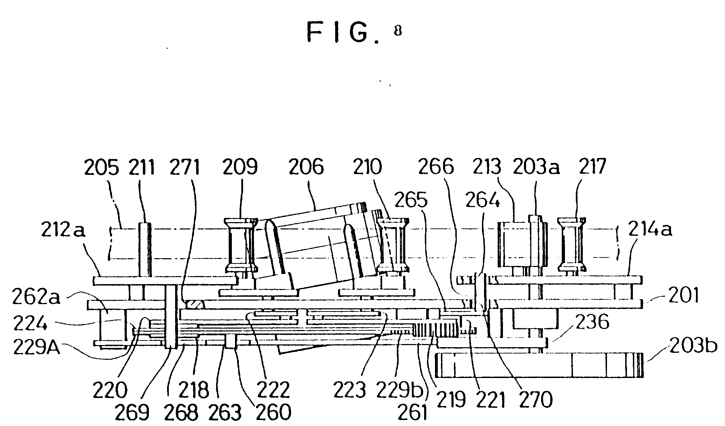

Fig. 8 is a longitudinal section of the apparatus shown in Figures 6 and 7.

Fig. 9 is a plan view of the essential parts of the second conventional device showing mainly parts attached to the upper surface of a chassis.

Fig. 10 is a plan view of the essential parts of the second conventional device showing mainly parts attached to the lower surface of the chassis.

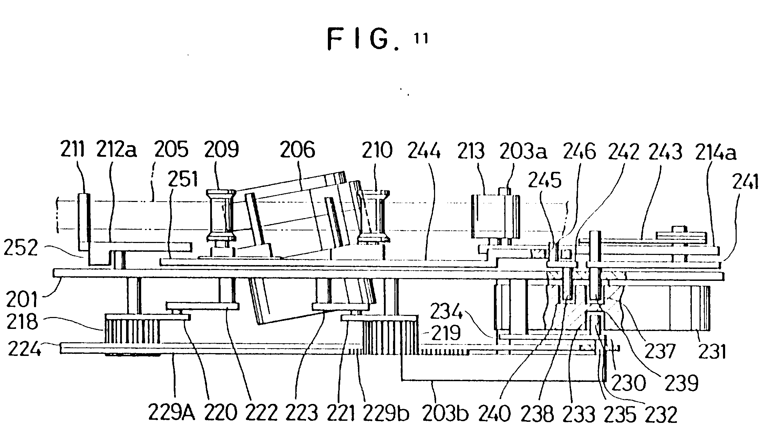

Fig. 11 is a longitudinal section of the essential parts of the second conventional device.

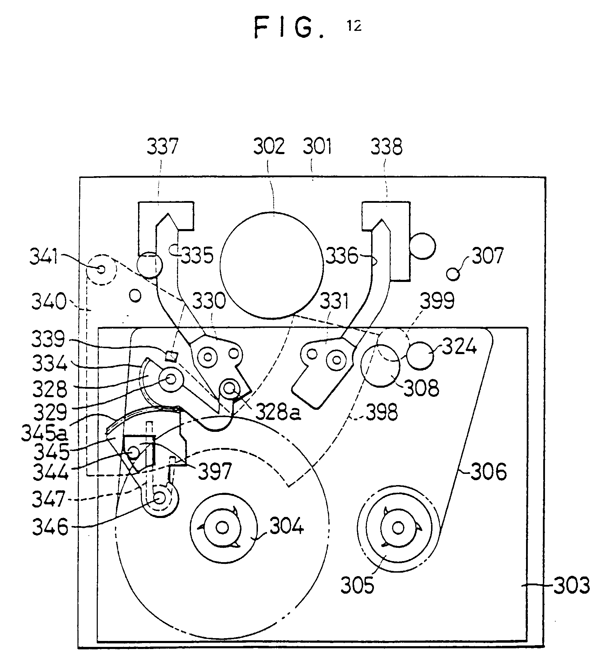

Fig. 12 is a plan view of a first alternative embodiment of the invention in a state of unloading.

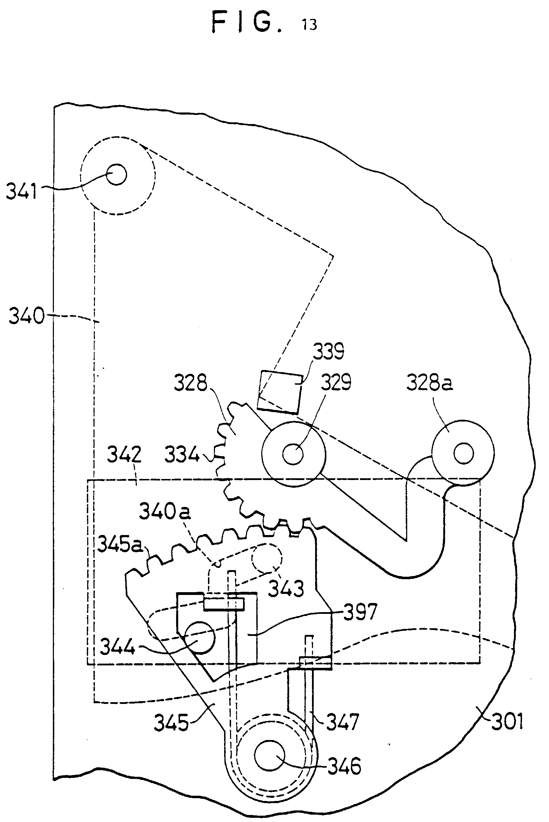

Fig. 13 is an enlarged view of the essential parts of the embodiment in Fig. 12.

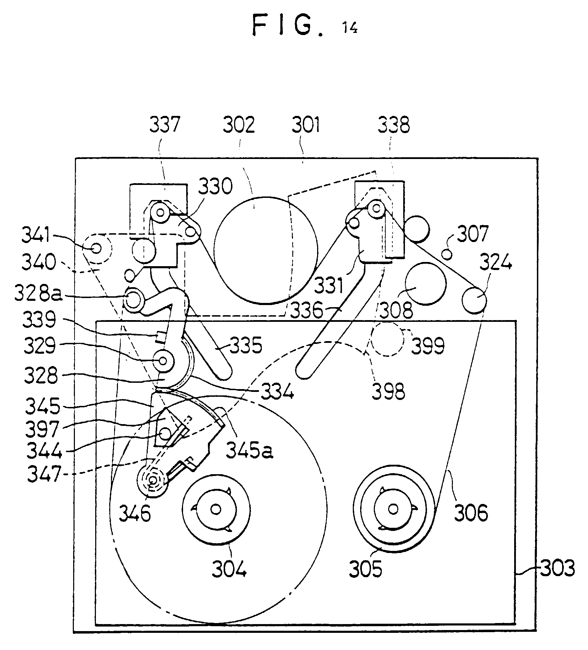

Fig. 14 is a plan view of the first alternative embodiment of the invention in a state of loading.

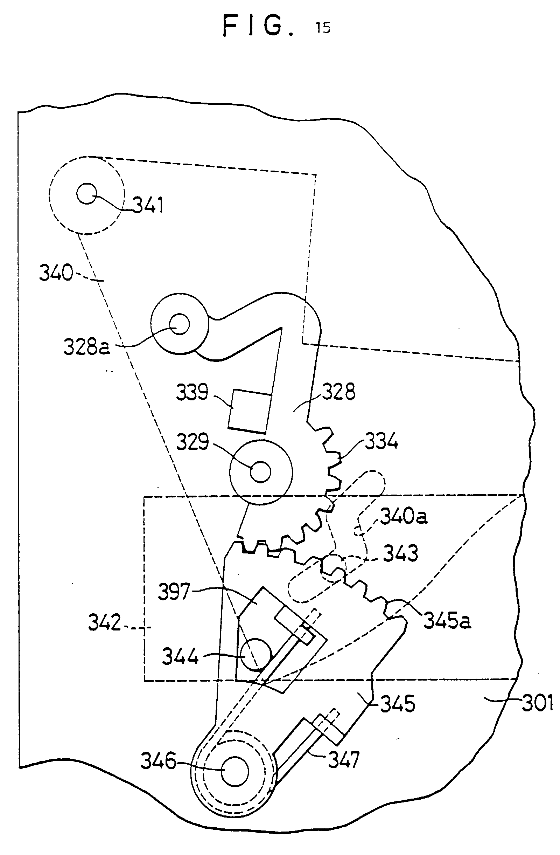

Fig. 15 is an enlarged view of the essential parts of the embodiment in Fig. 14.

Fig. 16 is a plan view of the third conventional magnetic tape recording and playback apparatus in a state of unloading.

Fig. 17 is a plan view of the third conventional magnetic tape recording and playback apparatus in a state of unloading.

Fig. 18 is a plan view of the third conventional magnetic tape recording and playback apparatus in a state of loading.

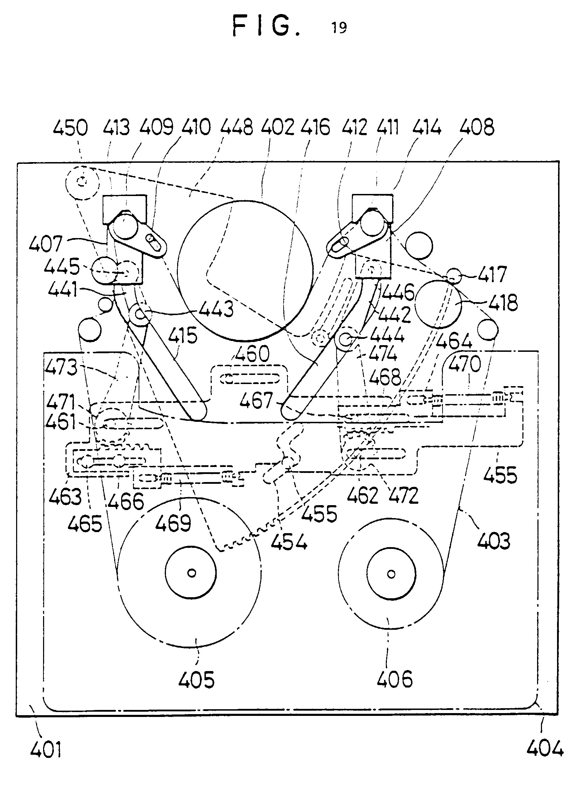

Fig. 19 is a plan view of a second alternative embodiment of the invention in a state of loading.

Fig. 20 is a plan view of a tape loading mechanism shown in Fig. 19.

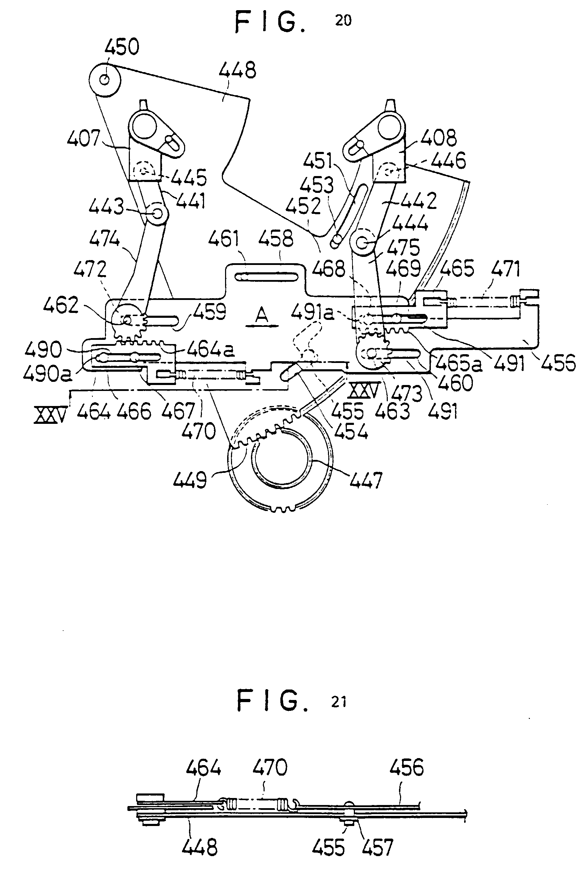

Fig. 21 is a cross section along the line XXV-XXV in Fig. 20

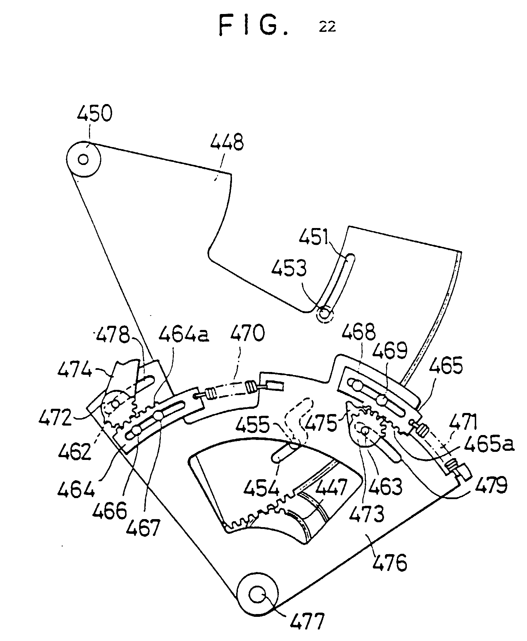

Fig. 22 is a plan view of a further alternative embodiment of the invention.

Fig. 23 is a plan view of the fourth conventional device in a state of loading.

Fig. 24 is a bottom view of tape loading mechanism shown in Fig. 23

Fig. 25 is a cross section along the line XXIX-XXIX in Fig. 24.

Fig. 26 is a drawing showing a structure of the tape loading mechanism of the fourth conventional device in a state of loading.

Fig. 27 is a drawing showing a structure of the tape loading mechanism of the fourth conventional device in a state of unloading.

An embodiment of the invention will be described below with reference to Figs. 1 and 2. Fig. 1 is a perspective view of a magnetic tape recording and playback apparatus of the invention. In the figure, 12 is a bridge type mechanical unit on which a mechanism portion is mounted, 13 is an integrated circuit board for carrying motors and an electrical circuit which drives or controls the motors, and 14 is screw which connects said mechanical unit 12 and integrated circuit board 13. These elements together constitute magnetic tape recording and playback apparatus 50.

Fig. 2 is an exploded view of said apparatus 50. 2 is a rotating drum, 4 is a loading mechanism drive motor, 5 is a pinch roller, and 6 is a pinch arm for supporting pinch roller 5. 7 is a capstan, 8 is a pair of reel blocks and 15 is a bridge type mechanical chassis. 16 is a drum base for fixing rotating drum 2 to mechanical chassis 15 and 17 is a rotor of motor for driving rotating drum 2. 18 is a drum rotation shaft, 19 is a capstan bearing, and 20 is a rotor of motor for driving capstan 7. These elements together constitute bridge type mechanical unit 12. 21 is a metal board on which a film of insulating material is coated, and 22 is a drum motor stator coil. 24 designates a pair of reel motor stator coils. 25 designates a pair of reel motor shafts and 26 designates reel motor rotors. 27 is a drive control IC, 28 is electronic parts, and 29 is a conductor pattern formed on metal board 21. These elements together constitute integrated circuit board 13. 30 designates a magnetic tape.

The magnetic tape recording and playback apparatus of the above construction is the same as the conventional apparatus shown in Fig. 3 in that the magnetic tape is taken out from the cassette, wound on rotating drum 2, and made to run by pinch roller 5 and capstan 7.

Rotor 17 fixed to rotating shaft 18 of a rotating drum 2 confronts stator coil 22 attached to metal board 21 at a slight distance apart from stator coil 22 so that a drum motor is constituted by rotor 17 and stator coil 22. On the other hand, rotor 20 attached to capstan 7 confronts stator coil 23 attached on board 21 at a slight distance apart from stator coil 23 so that a capstan motor is constituted by them. Furthermore, each reel motor rotor 26 which engages rotatably with reel motor shaft 25 fixed on metal board 21, and stator coil 24 which is attached on board 21 and confronts rotor 26 at a slight distance apart from it.

These motors are driven and controlled by an electrical circuit comprising drive control IC 27, and electronic parts 28 mounted on metal board 21.

The interface between the electrical circuit and the motors is provided by conductor pattern 29 formed on metal board 21. Namely, the stator coils 22 to 25 are connected electrically to the electrical circuit through conductor pattern 29.

An embodiment of the invention will be described below with reference to Figs. 4 to 8. Fig 4 is a plan view of the essential parts mounted on the upper surface of a chassis in a state of loading. Fig. 5 is a plan view of the essential parts mounted on the lower surface of the chassis in a state of loading. Fig. 6 is a plan view of the essential parts mounted on the upper surface of the chassis in a state of unloading. Fig. 7 is a plan view of the essential parts mounted on the lower surface of the chassis in a state of unloading. Fig. 8 is a longitudinal section of the parts of apparatus.

Elements which are identical or equivalent to those in the conventional device shown in Figs. 9 to 11 are given identical numbers, and further description of them is omitted.

In the figures, 260 is a pin mounted on lower slider 224. 261 is a fan-shaped rotating member supported underneath chassis 201 such that it can rotate on pivot 262a fixed on chassis 201. Also rotating member 261 has in its circumference a gear portion 261a which engages with drive gear 236. 262b is a projection formed on rotating member 261. 263 and 264 are guide grooves formed on rotating member 261 and pinch arm 214a, respectively. 265 is a pressure member mounted on rotating member 261 such that it can rotate on pivot 265a. 266 is a pin fixed on pressure member 265 such that it engages with guide groove 264. 267 is an extension spring of which one end is attached to rotating member 261; another end, to pressure member 265. 268 is a pressure portion formed on rotating member 261, 269 is a pin attached to tension arm 212a, and 270 and 271 are slots formed on chassis 201.

The operation of the apparatus will be explained below. Figs. 6 and 7 show the apparatus in the 1st position where tape loading blocks 209 and 210, tension pin 211, and pinch roller 213 are inside of tape cassette 204, i.e. in the position of unloading. Figs. 4 and 5 show the apparatus in the 2nd position where tape 205 has been taken out from cassette 204 and brought into contact with rotating drum 206, i.e. in the loading position. In Figs 6 and 7 the loading begins by starting a loading motor (not shown in the figure). The motor torque is transmitted to drive gear 236, and rotating member 261 which has gear portion 261a engaging with gear 236 rotates in the direction of arrow 288. Following this motion, pin 260 slides along guide groove 263 in Fig. 7, and lower slider 224 moves in the direction of arrow 287. Also at this time pressure member 229A is pulled by lower slider 224 through spring 229B and moves in the same direction as lower slider 224. Gears 218 and 219 which are engaged with racks 229a and 229b of pressure member 229A rotate, and arms 220 and 221 rotate in the directions of arrows 286 and 285, respectively. Tape loading blocks 209 and 210 move to the position shown in Figs. 4 and 5 while maintaining contact with tape 205, and extension spring 229B extends so as to press and fix tape loading blocks 209 and 210 against the ends of guide grooves 207 and 208. Simultaneously, when rotating member 261 rotates in the direction of arrow 288 pressure portion 268 is separated from pin 269. Tension arm 212a therefore rotates to the position where the tension in magnetic tape 205 balances the force exerted by extension spring 212b.

According to the rotation of rotating member 261, pressure member 265 which is mounted on rotating member 261 through pivot 265a moves together with rotating member 261. Since pin 266 fixed on pressure member 265 is engaging with guide groove 264 formed on pinch arm 214a, pinch arm 214a rotates on pivot 214c attached to chassis 201 in the direction of arrow 284. After pinch roller 213 comes into contact with capstan 203a, rotating member 261 rotates a little further, so extension spring 267 extends so as to give the pressure to pinch roller 213 as shown in Fig. 4.

At the time of unloading, the loading motor (not shown in the figure) rotates in the direction reverse to that in loading, and rotating member 261 moves in the direction reverse to arrow 288 under the action of the torque exerted by drive gear 236. Following this motion, as shown in Fig. 5, lower slider 224 moves in the direction of arrow 289 according to the sliding of pin 260 in guide groove 263, and tape loading blocks 209 and 210 return to the position shown in Fig. 7. At the same, as shown in Fig. 6, pressure portion 268 presses pin 269 and makes tension arm 212a rotate in the clockwise direction in opposition to the force of extension spring 212b. Pressure member 265 also moves together with rotating member 261 while maintaining contact with projection 262b, pin 266 slides along guide groove 264, and pinch arm 214a is pulled back to its original position by extension spring 214b as shown in Fig. 6.

In the embodiment, it is assumed the loading mechanism is that found in a magnetic tape recording and playback device where capstan 203a is situated outside of tape cassette 204 (e.g. R-DAT, β-VTR). It may however also be the mechanism found in a VHS-VTR or S-DAT where the capstan is situated inside of the tape cassette.

Furthermore, in the above embodiment it is also assumed that rotation pivot 262a of rotating member 261 is situated beside rotating drum 206, and that the member rotates to the extent of an angle of about 28°. The rotation pivot may however be situated elsewhere and the member may rotate by a different angle.

The first alternative embodiment of the invention will be described below with reference to Figs. 12 to 15. Fig. 12 is a plan view of the first alternative embodiment in a state of unloading. Fig. 13 is an enlarged view of the essential parts of the embodiment in Fig. 12, Fig. 14 is plan view of this embodiment in a state of loading, and Fig. 15 is an enlarged view of the essential pars of the embodiment in Fig. 14.

Identical or equivalent elements to those in said conventional apparatus shown in Figs. 16 to 18 are given identical numbers, and their descriptions are therefore omitted.

In the figures, 334 is a gear area formed on tape guide arm 328. 335 and 336 are tape guide grooves formed on chassis 301 to guide tape loading blocks 330 and 331. 337 and 338 are stoppers which stop tape loading blocks 330 and 331 at specific positions, and 339 is an arm stopper which stops tape guide arm 328 at a specific position. 340 is a fan-shaped rotating member attached to the lower surface of chassis 301 so as to rotate on pin 341 fixed on chassis 301. 340a is a guide groove formed on fan-shaped rotating member 340, and 342 is a slider installed on the lower surface of chassis 301 so as to slide to the left and right. 343 is a pin which is fixed on slider 342 and engages with guide groove 340a, and 344 is a transmission pin fixed on slider 342. 345 is an arm gear located on the upper surface of chassis 301 so as to rotate on pin 346 fixed on chassis 301, and its gear area 345a engages with gear area 334 formed on tape guide arm 328. 347 is a spring of which in the centre pin 346 is inserted and the both ends are attached to arm gear 345. 399 is a gear which is driven by a motor not shown and engages with gear portions 398 formed on the periphery of rotating member 340.

The operation of the apparatus will be described below. In Figs 12 and 13, when gear 399 is driven by a motor, since gear portion 398 engages with gear 399, fan-shaped rotating member 340 rotates on pin 341 in the loading direction, i.e. in the anticlockwise direction. At this time slider 342 is guided by guide groove 340a formed on rotating member 340, and the transmission pin 344 of slider 342 also moves to the right. When pin 344 comes into contact with one end of spring 347, arm gear 345 is rotated in the clockwise direction by another end of the spring, and tape guide arm 328 is rotated on pin 329 in the anticlockwise direction because gear portions 345a and 334 are engaged each other. When engaged with arm stopper 339, tape guide arm 328 stops. Tape guide arm 328 is held in the position by the force of coil spring 347 which is generated by further movement of slider 342. Because of these operations, the device reaches the loading position as shown in Figs. 14 and 15.

At the time of unloading, rotating member 340 is rotated in the clockwise direction and slider 342 slides to the left. When slider 342 reaches a specific position, pin 344 which moves in hole 397 formed on arm gear 345 engages with the left edge of hole 397. Therefore arm gear 345 and tape guide arm 328 rotate in the anticlockwise and clockwise directions, respectively. Thus the apparatus reaches the unloading position as shown in Figs. 12 and 13.

Fig. 19 is a plan view of the second alternative embodiment of the invention. In the figure reference numerals 401 to 418 and 411 to 446 designate identical or equivalent elements as in the prior art shown in Figs. 23 to 27. Fig. 20 is a plan view for explaining a driving mechanism with tape loading blocks 407 and 408 picked up by eliminating chassis 401 from the apparatus shown in Fig. 19. Fig. 21 is a cross section along the line XXV-XXV in Fig. 20.

In the figures 447 designates a driving gear mounted rotatably on chassis 401. 448 is a fan-shaped rotating member which has gear portion 449 engaging with driving gear 447 and is mounted on chassis 401 rotatably on pivot 450. 451 is a slot formed on a plate portion 452 of rotating member 448 so that slot 451 is located on a circle of which a centre is pivot 450. 453 is a pin which is attached on chassis 401 and has a step; the smaller diameter portion thereof is inserted in slot 451. The step acts as a guide for rotating member 448 in the radial and vertical directions when rotating member 448 rotates on pivot 450. 454 is a cam groove which is formed in a shape of a letter S on plate portion 452 of rotating member 448 and with which pin 455 engages. As shown in Fig. 21 one end of pin 455 is fixed on slider 456 and another passing through cam groove 454 is prevented from being separated from cam groove 454 by washer 457 fixed to it. Slider 456 is mounted on chassis 401 so as to be slidable by engagement between slots 458, 459 and 460 formed on slider 456 and posts 461, 462 and 463 fixed on chassis 401, respectively. Thus when rotating member 448 rotates on pivot 450, slider 456 can slide linearly in the direction of arrow A by the engagement between cam groove 454 and pin 455. 464 and 465 are sliders which have racks 464a and 465a and are mounted on slider 456 so as to be slidable by engagements between slots 490 and 491 formed on slider 464 and 465 and posts 466 and 467, and 468 and 469 attached on slider 456 respectively. Sliders 464 and 465 are pulled to the right in the drawing by springs 470 and 471 as elastic means interposed between slider 456 and sliders 464 and 465, so posts 466 and 468 are in contact with ends 490a and 491a of slots 490 and 491, respectively. 472 and 473 are gears which engage with racks 464a and 465a and are supported rotatably on posts 462 and 463. 474 and 475 are driving arms which rotate on posts 462 and 463 together with gears 472 and 473, respectively. Thus when slider 456 moves to the right, driving arms 474 and 475 rotate in the anticlockwise and clockwise directions, respectively. One end of each driving arm 474 and 475 is connected rotatably to arms 441 and 442 through pivots 443 and 444, and another end of each arm 441 and 442 is connected rotatably to tape loading blocks 407 and 408 through pivots 445 and 446, respectively.

In the magnetic tape recording and playback apparatus described above, at the time of loading, driving gear 447 is rotated in the clockwise direction by a motor (not shown), rotating member 448 rotates on pivot 450 in the anticlockwise direction, and slider 456 is guided by cam groove 454 formed on rotating member 448. At this time, sliders 464 and 465 move to the right together with slider 456 because springs 470 and 471 exert the forces exceeding loads which are generated at the time of tape-loading. By the engagement between racks 464a and 465a and gears 472 and 473, therefore, driving arms 474 and 475 rotate in the anticlockwise and clockwise directions, respectively, and tape loading blocks 407 and 408 move in the tape-loading direction along guide grooves 415 and 416. When tape loading blocks 407 and 408 engage with stoppers 413 and 414, respectively, sliders 464 and 465 stop. However, since slider 456 is driven further to the right, springs 470 and 471 generate forces for pressing tape loading blocks 407 and 408 against stoppers 413 and 414.

At the time of unloading, rotating member 448 is rotated in the clockwise direction and slider 456 slides to the left together with sliders 464 and 465. Therefore driving arms 474 and 475 rotate in the clockwise and anticlockwise directions, respectively and tape loading blocks 407 and 408 move in the reverse directions. Thus the apparatus reaches the unloading position.

Although in the embodiment described above, slider 456 moving linearly to the left and right is shown, as shown in Fig. 22, a member rotating on a pivot can be employed instead of the slider. In this embodiment 476 is a slider which can rotate on pivot 477 attached on chassis 401, has slots 478 and 479 located on circle of which centres are pivot 477, and also has pin 455 engaging with cam groove 454. Furthermore, sliders 464 and 465, which have gear portions 464a and 465a engaging with gears 472 and 473, respectively, are mounted on slider 476 so that they can rotate on pivot 477. Springs 470 and 471 generate forces for pulling sliders 464 and 465 in the clockwise direction. It is apparent that in this embodiment when rotating member 448 rotates on pivot 450 in the anticlockwise and clockwise directions, slider 476 rotates on pivot 477 in the clockwise and anticlockwise directions and the tape can be loaded and unloaded, respectively.

## Claims

1. A magnetic tape recording and playback apparatus for recording signals on and playing back signals from a magnetic tape (205), comprising:
a rotatable drum (206);
a tape loading block (209,210) which serves to remove a magnetic tape (205) from a tape cassette (204) and winds the tape (205) around the drum (206);
a rotatable member (261) comprising an arcuate portion which has at least one guide groove (263);
means (261a, 236) for driving the rotatable member (261) and
a slider (224) which is drivably connected to means for advancing and retracting said tape loading block (209, 210) so that movement of the slider (224) in a first direction advances said loading block (209, 210) to a loading position in which the magnetic tape (205) is in contact with said rotating drum (206) and movement of the slider (224) in a second direction retracts said loading block to an unloading position;
characterised by a pin (260) fixed to said slider (224) and in sliding engagement with said guide groove (263) in the rotatable member (261) and by gearing (261a) on the arcuate portion of the rotatable member (261) which engages with a drive gear (236) so as to form said means for driving the rotatable member (261) whereby driving of said rotatable member (261) causes said pin (260) to slide within the groove (263) and thereby urges said slider (224) to move in said first or second directions.

2. An apparatus according to Claim 1 and further comprising a chassis (201) on which the rotatable drum (206) is rotatably mounted, the tape loading block (209, 210) being slidably mounted within guide grooves (207, 208) of said chassis (201) and the slider (224) being slidably hung beneath a lower planar surface of said chassis (201) with said pin (260) fixed to a lower surface of said moving member (224).

3. The apparatus according to Claim 1 or 2 and further comprises:
a capstan (203a);
a pinch arm (214a) having a guide groove (264);
a pinch roller (213) mounted on said pinch arm (214a) and which is urged against the capstan (203a) during operation to pinch the magnetic tape (205) between the pinch roller (213) and the capstan (203a) to move the magnetic tape (205).

4. The apparatus according to Claim 3, wherein said rotatable member (261) further includes a pressure member (265) pivoted with one part thereof on the rotatable member (261); and
a further pin (266) fixed to another part of the pressure member (265) which is slidably engaged with said guide groove (264) of the pinch arm (214a) so that as said rotatable member (261) rotates in said one direction said pressure member (265) is pivoted on said rotatable member (261) and said pin (266) fixed on said pressure member (265) moves and, by engagement between said pin (266) and said guide groove (264) of said pinch arm (214a), said pinch arm (214a) is rotated to move said pinch roller (213) towards said capstan (203a).

5. The apparatus according to Claim 1, 2, 3 or 4 and further comprising:
a tension arm (212a) and
a tension post (211) which is fixed to said tension arm (212a) and which controls the tension on the magnetic tape (205) and
a pin (269) fixed to said tension arm (212a) and a spring (212b) which gives biasing force to the tension arm (212a) in one direction; wherein
said rotatable member (261) has a pressure portion (268) which is in contact with said pin (269) overcoming the biasing force from said spring (212b) when the apparatus is in the unloading state and is pulled away from said pin (269) when the apparatus is brought to the loading state and said rotatable member (261) rotates in said one direction so that said tension post (211) is brought to a position in which it applies tension to the magnetic tape (205).

6. The apparatus according to any one of claims 1 to 5 wherein rotation of said rotatable member (261) in an unloading direction causes said pin (260) fixed to said slider (224) to follow said at least one guide groove (263) of said rotatable member (261), thus causing the slider (224) to move in the second direction enabling retraction of said tape loading block (209, 210) to the unloading position in which the magnetic tape (205) is out of contact with said rotatable drum (206).

7. The apparatus according to any one of claims 1 to 6, wherein the rotatable member (340) serves to move a tape guide post (328a) and the apparatus further comprises an arm gear having a gear portion (345a) which is rotated by the slider (342); and
a tape guide arm (328) on which the tape guide post (328a) is attached and which has a gear portion (334) engaging with the gear portion (345a) of the arm gear (345) and is rotated by the arm gear (345) such that the tape guide post (328a) is movable between an unloading position and a loading position.

8. The apparatus according to claim 7, and further comprising:
a further pin (344) which is attached to the slider (342) and inserted in a hole (397) formed on the arm gear (345) and
a spring (347) located on the arm gear (345) so that another pin (343) attached to the slider (342) engages with the spring (347).

9. The apparatus according to claim 8, and further comprising:
an arm stopper (339) for engaging with the tape guide arm (328) so that the tape guide arm (328) stops at a specific rotation position.

10. The apparatus according to claim 1, wherein the slider (224) is rectilinearly slidable.

11. The apparatus according to claim 1 wherein the slider (476) is rotatable on a pivot (477).

12. The apparatus according to claim 1, wherein said means (220-223) for advancing and retracting said loading block (209,210) includes link arms pivotably connected at first ends thereof to said tape loading block (209,210) and at second ends thereof to said slider (224) by a rack (229a,b) and gear arrangement (218,232), whereby sliding movements of said slider (224) in the first direction advance said link arms (220-223) and said loading block (209, 210) in the loading direction and sliding movements of said slider (224) in the second direction retracts said link arms (220-223) and said loading block (290, 210) in the unloading direction.

## Patentansprüche

1. Magnetbandaufzeichnungs- und Wiedergabeapparat zum Aufzeichnen von Signalen auf und Wiedergeben von Signalen von einem Magnetband (205), welcher aufweist:
eine drehbare Trommel (206);
einen Bandladeblock (209,210), welcher zum Entfernen eines Magnetbandes (205) aus einer Bandkassette (204) dient und das Band (205) um die Trommel (206) wickelt;
ein drehbares Glied (261), welches einen bogenförmigen Bereich hat, der zumindest eine Führungsnut (263) hat;
Mittel (261a,236) zum Antrieb des drehbaren Gliedes und
einen Gleiter (224), der antreibbar mit Mitteln zum Vorrücken und Zurückziehen des Bandladeblockes (209,210) so verbunden ist, daß eine Bewegung des Gleiters (224) in einer ersten Richtung den Ladeblock (209,210) in eine Ladeposition vorrückt, in welcher das Magnetband (205) in Kontakt mit der drehenden Trommel (206) ist, und eine Bewegung des Gleiters (224) in einer zweiten Richtung den Ladeblock in eine Entladeposition zurückzieht;
**gekennzeichnet durch**
einen am Gleiter (224) befestigten Stift (260), der in gleitendem Eingriff mit der Führungsnut (263) in dem drehbaren Glied (261) ist, und durch eine Verzahnung (261a) auf dem bogenförmigen Bereich des drehbaren Gliedes (261), welches in Eingriff mit einem Antriebszahnrad (232) ist, um die Mittel zum Antrieb des drehbaren Gliedes (261) zu bilden, wodurch der Antrieb des drehbaren Gliedes (261) ein Gleiten des Stiftes (260) innerhalb der Nut (263) bewirkt und dadurch den Gleiter (224) zwingt, sich in der ersten oder zweiten Richtung zu bewegen.

2. Apparat nach Anspruch 1 und weiterhin aufweisend ein Chassis (201), auf welchem die drehbare Trommel (206) drehbar befestigt ist, der Bandladeblock (209,210) gleitbar innerhalb von Führungsnuten (207,208) des Chassis (201) befestigt ist und der Gleiter (224) gleitbar unter eine untere ebene Oberfläche des Chassis (201) gehängt ist, wobei der Stift (260) an einer unteren Oberfläche des sich bewegenden Gliedes (224) befestigt ist.

3. Apparat nach Anspruch 1 oder 2 und weiterhin aufweisend:
einen Kapstan (203a);
einen Klemmarm (214a) mit einer Führungsnut (264);
eine auf dem Klemmarm (214a) befestigte Klemmrolle (213), die während des Betriebs gegen den Kapstan (203a) gedrückt wird, um das Magnetband (205) zwischen der Klemmrolle (213) und dem Kapstan (203a) zur Bewegung des Magnetbandes (205) einzuklemmen.

4. Apparat nach Anspruch 3, worin das drehbare Glied (261) weiterhin ein Druckglied (265) enthält, das mit einem Teil hiervon auf dem drehbaren Glied (261) drehbar gelagert ist; und ein weiterer Stift (266) an einem anderen Teil des Druckgliedes (265) befestigt ist, welcher so in gleitbarem Eingriff mit der Führungsnut (264) des Klemmarms (214a) ist, daß, wenn das drehbare Glied (261) sich in der einen Richtung dreht, das Druckglied (265) auf dem drehbaren Glied (261) geschwenkt wird und der auf dem Druckglied (265) befestigte Stift (266) sich bewegt, und durch Eingriff zwischen dem Stift (266) und der Führungsnut (264) des Klemmarms (214a) dieser gedreht wird, um die Klemmrolle (214a) gegen den Kapstan (203a) zu bewegen.

5. Apparat nach Anspruch 1, 2, 3 oder 4 und weiterhin aufweisend:
einen Spannarm (212a) und
einen Spannpfosten (211), der an dem Spannarm (212a) befestigt ist und der die Spannung des Magnetbandes (205) regelt, und
einen an dem Spannarm (212a) befestigten Stift (269) und eine Feder (212b), welche dem Spannarm (212a) eine Vorspannkraft in einer Richtung gibt;
worin das drehbare Glied (261) einen Druckbereich (268) hat, der in Kontakt mit dem Stift (269) ist, der die Vorspannkraft der Feder (212b) überwindet, wenn der Apparat im Entladezustand ist, und von dem Stift (269) weggezogen wird, wenn der Apparat in den Ladezustand gebracht ist, und das drehbare Glied (261) sich in der einen Richtung dreht, so daß der Spannpfosten (211) in eine Position gebracht ist, in welcher er eine Spannung auf das Magnetband (205) ausübt.

6. Apparat nach einem der Ansprüche 1 bis 5, worin die Drehung des drehbaren Gliedes (261) in eine Entladerichtung bewirkt, daß der an dem Gleiter (224) befestigte Stift (260) der wenigstens einen Führungsnut (263) des drehbaren Gliedes (261) folgt, wodurch bewirkt wird, daß der Gleiter (224) sich in die zweite Richtung bewegt, womit ein Rückzug des Bandladeblocks (209,210) in die Entladeposition ermöglicht wird, in welcher das Magnetband (205) außer Kontakt mit der drehbaren Trommel (206) ist.

7. Apparat nach einem der Ansprüche 1 bis 6, worin das drehbare Glied (340) zum Bewegen eines Bandführungspfostens (328a) dient und der Apparat weiterhin ein Armzahnrad aufweist mit einem Zahnbereich (345a), welches durch den Gleiter (342) gedreht wird; und
ein Bandführungsarm (328), auf welchem der Bandführungspfosten (328a) befestigt ist und welcher einen Zahnbereich (334) hat, der mit dem Zahnbereich (345a) des Armzahnrades (345) in Eingriff ist, und so durch das Armzahnrad (345) gedreht wird, daß der Bandführungspfosten (328a) zwischen einer Entladeposition und einer Ladeposition bewegbar ist.

8. Apparat nach Anspruch 7 und weiterhin aufweisend:
einen weiteren Stift (344), welcher an dem Gleiter (342) befestigt und in ein in dem Armzahnrad (345) gebildetes Loch (397) eingeführt ist, und eine auf dem Armzahnrad (345) so angeordnete Feder (347), daß ein an dem Gleiter (342) befestigter anderer Stift (343) mit der Feder (347) in Eingriff ist.

9. Apparat nach Anspruch 8 und weiterhin aufweisend:
einen Armanschlag (339) für den Eingriff mit dem Bandführungsarm (328), so daß der Bandführungsarm (328) in einer bestimmten Drehstellung anhält.

10. Apparat nach Anspruch 1, worin der Gleiter (224) geradlinig gleitbar ist.

11. Apparat nach Anspruch 1, worin der Gleiter (476) auf einem Zapfen (477) drehbar ist.

12. Apparat nach Anspruch 1, worin die Mittel (220-223) zum Vorrücken und Zurückziehen des Ladeblocks (209,210) Verbindungsarme enthält, die mit ihren ersten Enden mit dem Bandladeblock (209,210) und mit ihren zweiten Enden mit dem Gleiter (224) drehbar verbunden sind durch eine Zahnstangen(229a,b)/Zahnrad(218,232)-Anordnung, wodurch Gleitbewegungen des Gleiters (224) in der ersten Richtung die Verbindungsarme (220-223) und den Ladeblock (209,210) in der Laderichtung vorrücken und Gleitbewegungen des Gleiters (224) in der zweiten Richtung die Verbindungsarme (220-223) und den Ladeblock (209,210) in der Entladerichtung zurückziehen.

## Revendications

1. Appareil d'enregistrement et de reproduction à bande magnétique pour l'enregistrement de signaux sur une bande magnétique (105) et la reproduction de signaux à partir d'une bande magnétique (205), comprenant :
un tambour rotatif (206) ;
un bloc de chargement de bande (209,210) servant à l'enlèvement d'une bande magnétique (205) d'une cassette de bande (204) et à l'enroulement de la bande (205) autour du tambour (206) ;
un élément rotatif (261) comprenant une partie courbe comportant au moins une rainure de guidage (263) ;
des moyens (261,236) pour l'entraînement de l'élément rotatif (261) et une pièce coulissante (224) connectée de façon commandable à des moyens pour faire avancer et rétracter ledit bloc de chargement de bande (209,210) de sorte que le mouvement de la pièce coulissante (224) dans une première direction fasse avancer ledit bloc de chargement (209,210) jusqu'à une position de chargement dans laquelle la bande magnétique (205) est en contact avec le tambour rotatif (206) et le mouvement de la pièce coulissante (224) dans une seconde direction rétracte ledit bloc de chargement dans une position de déchargement ;
caractérisé en ce qu'il comporte une broche (260) fixée à ladite pièce coulissante (224) et en engagement de coulissement avec ladite rainure de guidage (263) dans l'élément rotatif (261) et un engrenage (261a) sur la partie courbe de l'élément rotatif (261) coopérant avec un pignon d'entraînement (236) de manière à former lesdits moyens d'entraînement de l'élément rotatif (261) de sorte que l'entraînement dudit élément rotatif (261) provoque le glissement de ladite broche (260) à l'intérieur de la rainure (263) et sollicite ainsi ladite pièce coulissante (224) en mouvement dans lesdites première et seconde directions.

2. Appareil selon la revendication 1, comportant en outre un châssis (201) sur lequel le tambour rotatif (206) est monté de façon rotative, le bloc de chargement de bande (209,210) étant monté à coulissement à l'intérieur desdites rainures de guidage (207,208) dudit châssis (201), l'élément coulissant (224) étant suspendu au-dessous d'une surface plane inférieure du châssis (201), ladite broche (260) étant fixée à une surface inférieure de l'élément coulissant (224).

3. Appareil selon l'une des revendications 1 et 2, et en outre comportant :
un cabestan (203a) ;
un bras presseur (214a) comportant une rainure de guidage (264);
un rouleau presseur (213) monté sur ledit bras presseur (214a) et sollicité contre ledit cabestan (203a) en fonctionnement pour presser la bande magnétique (205) entre le rouleau presseur (213) et le cabestan (203a) pour déplacer la bande magnétique (205).

4. Appareil selon la revendication 3, dans lequel ledit élément rotatif (261) comporte en outre un élément de compression (265) monté pivotant avec une partie de celui-ci sur l'élément rotatif (261); et
une broche additionnelle (266) fixée à une autre partie de l'élément de compression (265) coopèrant par coulissement avec ladite rainure de guidage (264) du bras presseur (214a) de sorte que lorsque l'élément rotatif (261) tourne dans ladite une direction, ledit élément de compression (265) pivote sur l'élément rotatif (261) et ladite broche (266) fixée sur ledit élément de compression (265) se déplace et, par engagement de la broche (266) et de ladite rainure de guidage (264) du bras presseur (214a), ledit bras presseur (214a) tourne pour déplacer ledit rouleau presseur (213) en direction dudit cabestan (203a).

5. Appareil selon l'une des revendications 1,2,3 ou 4 et en outre comportant un bras tenseur (212a) et
un montant tenseur (211) fixé audit bras tenseur (212a) et qui commande la tension de la bande magnétique (205) et,
une broche (269) fixée audit bras tenseur (212a) et un ressort (212b) fournissant une force de sollicitation au bras tenseur (212a) dans une direction ; dans lequel
ledit élément rotatif (261) comporte une partie de pression (268) en contact avec ladite broche (269) s'opposant à la force de sollicitation fournie par le ressort (212b) lorsque l'appareil est dans la position de déchargement et est dégagé de la broche (269) lorsque l'appareil est amené dans la position de chargement, et l'élément rotatif (261) tourne dans ladite une direction de sorte que le montant tenseur (211) est amené dans une position dans laquelle il applique une tension à la bande magnétique (205).

6. Appareil selon l'une quelconque des revendications 1 à 5, dans lequel la rotation de l'élément rotatif (261) dans une direction de déchargement entraîne ladite broche (261) fixée à la pièce coulissante (224) à suivre ladite au moins une rainure de guidage (263) de l'élément rotatif (261), provoquant ainsi le déplacement de la pièce coulissante (224) dans une deuxième direction autorisant le retrait dudit bloc de chargement de bande (209,210) dans la position de déchargement dans laquelle la bande magnétique (205) est hors de contact avec le tambour rotatif (206).

7. Appareil selon l'une quelconque des revendications 1 à 6, dans lequel l'élément rotatif (340) sert à déplacer un montant de guidage de bande (328a) et l'appareil comporte en outre un pignon formant levier comportant une partie d'engrenage (345a) entraînée en rotation par la pièce coulissante (342) ; et
un bras de guidage de bande (328) sur lequel le montant de guidage de bande (328a) est fixé comportant une partie d'engrenage (334) coopérant avec la partie d'engrenage (345) du pignon formant levier (345) et est entraîné en rotation par le pignon formant levier (345) de sorte que le montant de guidage de bande (328a) est déplaçable entre une position de déchargement et une position de chargement.

8. Appareil selon la revendication 7, comportant en outre:
une broche additionnelle (344) fixée à la pièce coulissante (342) et insérée dans un trou (397) formé sur le pignon formant levier, et
un ressort (347) situé sur le pignon formant levier (345) de sorte qu'une autre broche (343) fixée à la pièce coulissante (342) coopère avec le ressort (347).

9. Appareil selon la revendication 8, comportant en outre une butée de bras (339) coopérant avec le bras de guidage de bande (328) de sorte que le bras de guidage de bande (328) s'arrête dans une position angulaire spécifique.

10. Appareil selon la revendication 1, dans lequel la pièce coulissante (224) est coulissante de façon rectiligne.

11. Appareil selon la revendication 1, dans lequel la pièce coulissante (476) est montée rotative sur un pivot (477).

12. Appareil selon la revendication 1, dans lequel lesdits moyens (220-223) pour faire avancer et rétracter le bloc de chargement (209,210) comportent des bras de liaison connectés de façon pivotante par des premières extrémités de ceux-ci au bloc de chargement de bande (209,210) et par des secondes extrémités de ceux-ci à ladite pièce coulissante (224) par une crémaillère (229a,b) et un dispositif à engrenage (218,232) de sorte que des mouvements de coulissement de la pièce coulissante (224) dans la première direction avance les bras de liaison (220-223) et le bloc de chargement (209,210) dans la direction de chargement et des mouvements de coulissement de la pièce coulissante (224) dans la seconde direction rétracte les bras de liaison (220-223) et le bloc de chargement (290,210) dans la direction de déchargement.
